# EUROPÄISCHE PATENTANMELDUNG

(11) **EP 2 865 659 A1**
(43) Veröffentlichungstag der Anmeldung: **29.04.2015**
(21) Anmeldenummer: 13190528.3
(22) Anmeldetag: 28.10.2013
(51) Int. Cl.: C05D 3/02, C05G 3/00, C05G 3/06

(54) **Wässrige Suspensionszubereitungen und deren Verwendung als Blattdünger**

(71) Anmelder: Agrosolution GmbH & Co. KG, 4020 Linz (AT)
(72) Erfinder: Huemer-Hartl, Peter, 4202 Kirchschlag bei Linz (AT); Knauseder, Franz, 6322 Kirchbichl (AT)
(74) Vertreter: Patentanwaltskanzlei Matschnig & Forsthuber OG

(57) **Zusammenfassung**

Die Erfindung betrifft eine wässrige Suspensionszubereitung umfassend in Wasser suspendiertes mikropartikelförmiges Calcit-Mineral mit einem Partikeldurchmesser von ≤ 35 µm, Pflanzenextrakt, und Tensid, mit dem das Zeta-Potential des in Wasser suspendierten mikropartikelförmigen Calcit-Minerals in den negativen Bereich verschiebbar ist, und die Verwendung dieser wässrigen Suspensionszubereitung als Blattdünger. Außerdem betrifft die Erfindung einen Blattdünger umfassend diese wässrige Suspensionszubereitung.

## Beschreibung

### TECHNISCHES GEBIET DER ERFINDUNG

Die Erfindung betrifft eine neuartige wässrige Suspensionszubereitung umfassend ein in Wasser suspendiertes mikropartikelförmiges Calcit-Mineral und die Verwendung dieser wässrigen Suspensionszubereitung als Blattdünger. Außerdem betrifft die Erfindung einen Blattdünger umfassend diese wässrige Suspensionszubereitung.

Das Wachstum von Pflanzen wird unter anderem durch Faktoren wie Bodenverhältnisse, Witterung sowie eine auf die jeweilige Pflanzenart richtig angepasste Nährstoffzusammensetzung und Wasserversorgung bestimmt. Eine entsprechend abgestimmte Düngung hat den Zweck, das Pflanzenwachstum in Hinblick auf Ertrag, Fruchtgröße, Qualität und Pflanzengesundheit positiv zu beeinflussen. Im Sinne einer nachhaltigen und innovativen Landwirtschaft ist dabei ein umwelt- und Ressourcen schonender Düngemitteleinsatz besonders wünschenswert.

Pflanzendünger enthalten typischerweise die Hauptnährstoffe Stickstoff, Phosphor, Kalium, Magnesium und Calcium sowie diverse Spurenelemente. Mineralsalze werden von Pflanzen vorwiegend über die Wurzeln aus der wässrigen Bodenlösung aufgenommen, wobei die Zusammensetzung der Bodenlösung durch Bodendüngung mittels Bodendüngungsmitteln entsprechend angepasst werden kann. Pflanzen nehmen Mineralsalze aber auch über hydrophile Kleinporen Ihrer grünen Pflanzenteile (Blätter, Stamm) in das Pflanzeninnere auf. In bestimmten Wachstumsstadien werden Pflanzen daher zunehmend mittels Blattdüngung mit Nährstoffen versorgt. Blattdünger werden mit Hilfe von Spritz- oder Sprühverfahren auf die grünen Pflanzenteile aufgebracht und die darin enthaltenen Nährstoffe werden dann über die hydrophilen Kleinporen aufgenommen. Die Blattdüngung hat den Vorteil einer raschen Nährstoffaufnahme, so dass ein kurzfristiger Nährstoffbedarf schnell und effizient gedeckt werden kann. Besonders von Vorteil ist eine Blattdüngung auch dann, wenn die Bodenbeschaffenheit eine Aufnahme von Nährstoffen über die Wurzeln und somit eine Bodendüngung erschwert. Ein weiterer Vorteil der Blattdüngung ist es, dass Mikroelemente und Wuchsstoffe der Pflanze rechtzeitig zur Verfügung gestellt werden können. Nachteilig an der Blattdüngung ist, dass Makroelemente wie Stickstoff, Phosphor und Kalium nicht in genügender Menge eingebracht werden können. Besonders wichtig sind dabei die richtige Konzentration der Nährstoffe in der Blattdüngerlösung sowie der Zeitpunkt der Blattdüngung, der sich nach dem Wachstumsstadium der Pflanze richtet.

### STAND DER TECHNIK

Die Pflanze benötigt für ein optimales Wachstum einen entsprechenden CO₂-Haushalt. Für eine hohe Photosynthese liegt das Optimum bei einem CO₂-Gehalt zwischen 0,1 und 1,0 Vol.-%. Luft hat jedoch nur einen CO₂-Gehalt von 0,03 Vol.-%, weshalb die Pflanzen ihr Wachstumspotential nicht voll ausnutzen können. Durch Zufuhr von CO₂ mit Hilfe von Düngemitteln kann die Photosyntheseleistung gesteigert werden. Für diese Zwecke kommen Blattdünger basierend auf wässrigen Suspensionen von mikropartikelförmigem Calcit-Mineral zum Einsatz, die an sich aus dem Stand der Technik bekannt sind. Das hierfür eingesetzte Calcit-Mineral (auch Kalkspat oder Kalzit genannt) stammt zweckmäßigerweise aus natürlichen Quellen und setzt sich hauptsächlich aus CaCO₃ und - je nach Abbaugebiet - einer Reihe von Spurenelementen von Magnesium, Eisen, Schwefel, Mangan, Zink etc. zusammen. Für die Anwendung als Blattdünger wird das Calcit-Mineral fein vermahlen und in Wasser suspendiert. Diese Suspension wird als feiner Sprühnebel auf die Blattober- und - unterseite der Pflanze aufgebracht und die darin enthaltenen Mineralien (Carbonate) dringen über die Spaltöffnungen des Blattes in das Pflanzeninnere ein, wo sie CO₂ freisetzen.

Die WO 2009/087426 A1 beschreibt eine Zubereitung basierend auf einem mikropartikelförmigen Calcit-Mineral mit einer Partikelgröße < 5 µm und einem Hilfsstoff, der unter anderem ein Pflanzenextrakt sein kann, zur Verwendung als Pflanzen-Booster und Mineraldünger.

Blattdünger basierend auf einem in Wasser suspendierten mikropartikelförmigen Calcit-Mineral werden unter anderem von der Firma Agrosolution GmbH, Österreich, hergestellt und vertrieben und sind unter dem Handelsnamen Agrosol (CAS-Nr. 1317-65-3) erhältlich.

Ebenfalls hinlänglich bekannt ist die Verwendung von Meeresalgenextrakten als Düngemittel, einschließlich Blattdüngemittel, zur Anregung des Pflanzenwachstums und als Pflanzenstimulans (siehe z.B. Khan et al. 2009. J Plant Growth Regul 28:386-399). Meeresalgenextrakte enthalten eine Reihe an für Pflanzen vorteilhaften wachstumsfördernden Stoffen, z.B. Phytohormone, komplexe Kohlenhydrate, Mineralien und Spurenelemente.

### BESCHREIBUNG DER ERFINDUNG

Es hat sich nun herausgestellt, dass der Zusatz von Pflanzenextrakten, z.B. Meeresalgenextrakte, zu Blattdüngern, die auf einer wässrigen Suspension von mikropartikelförmigem Calcit-Mineral basieren, zu einer unerwünschten Adsorption von im Extrakt enthaltenen wachstumsfördernden Stoffen an die Calcit-Mineral-Mikropartikel führt. Die im Extrakt enthaltenen wachstumsfördernden Stoffe stehen der Pflanze folglich nicht im erwünschten Ausmaß zur Verfügung, weshalb die wachstumsfördernde Wirkung des Extrakts nicht zur Gänze zum Tragen kommt und folglich eine höhere Konzentration des Extrakts im Blattdünger erforderlich ist. Dieser Umstand wirkt sich nicht nur negativ auf die Kosten aus, sondern hat auch einen unnötig hohen Düngemitteleintrag in die Umgebung zur Folge.

Es ist daher eine Aufgabe der Erfindung, einen Blattdünger zur Verfügung zu stellen, der einerseits ein hohes Pflanzenwachstum mit sich bringt und andererseits einen kosten-, umwelt- und ressourcenschonenden Düngemitteleinsatz ermöglicht.

Diese Aufgabe wird mit einer wässrigen Suspensionszubereitung gelöst, die erfindungsgemäß umfasst:
ein in Wasser suspendiertes mikropartikelförmiges Calcit-Mineral mit einem Partikeldurchmesser von ≤ 35 µm, Pflanzenextrakt, und Tensid, mit dem das Zeta-Potential des in Wasser suspendierten mikropartikelförmigen Calcit-Minerals in den negativen Bereich verschiebbar ist.

Dank der Erfindung wird die Adsorption wichtiger, im Pflanzenextrakt vorhandener wachstumsfördernder Stoffe an die Calcit-Mineral-Mikropartikel minimiert, wenn nicht zur Gänze verhindert. Dieser vorteilhafte und unvorhergesehene technische Effekt wird durch die hierin gezeigten Beispiele belegt (siehe unten).

Die Erfinder konnten den überraschenden Sachverhalt feststellen, dass durch den Zusatz eines Tensids, welches das Zeta-Potential des in Wasser suspendierten mikropartikelförmigen Calcit-Minerals in den negativen Bereich verschiebt, die Adsorption von im Pflanzenextrakt vorhandenen wachstumsfördernden Stoffen an das Calcit-Mineral verhindert wird. Tenside, die diese Eigenschaft besitzen, können von einem Fachmann auf dem Gebiet angesichts der Lehre dieser Offenbarung durch Messung des Zeta-Potentials im Rahmen einfacher Routineversuche aufgefunden werden. Dabei wird zuerst das Zeta-Potential des in Wasser suspendierten mikropartikelförmigen Calcit-Minerals gemessen, anschließend das Tensid zugegeben und das Zeta-Potential nochmals gemessen. Zeta-Potentialmessungen und die diesen Messungen zugrunde liegenden Vorrichtungen (z.B. Mütek™ SZP-10 System Zeta Potential) und Verfahren sind dem einschlägigen Fachmann hinlänglich bekannt.

Unter dem Begriff "Tensid" wie hierin verwendet sind sowohl eine einzige Tensidart als auch Mischungen von zwei oder mehr Tensiden zu verstehen.

Das Zeta-Potential sowie die Messung des Zeta-Potentials von Calziumcarbonaten wie Calcit in wässrigen Suspensionen wurde beispielsweise von Sawada bereits ausführlich beschrieben (Sawada K. 1997. Pure&Appl. Chem. 69(5):921-928). Unter den üblichen experimentellen Bedingungen liegt das Zeta-Potential von Calcit typischerweise im leicht negativen Bereich und kann in Abhängigkeit des Ursprungs des Calcit-Minerals und der Konzentration des Calcit-Minerals in der wässrigen Suspension in einem gewissen Bereich variieren. Beispielsweise liegt das Zeta-Potential eines in Wasser suspendierten mikropartikelförmigen Calcit-Minerals bei einer Konzentration von 15 g/L Wasser in einem Bereich von ca. + 10mV bis ca. -10 mV.

Calcit ist ein häufig vorkommendes Mineral. Für die Anwendung in der Erfindung stammt es zweckmäßigerweise aus natürlichen Quellen. Mikropartikelförmiges Calcit-Material definierter Partikelgröße kann beispielsweise von der Firma Agrosolution GmbH, Österreich, bezogen werden.

Der Partikeldurchmesser der Calcit-Mikropartikel ist 35 µm oder kleiner (≤ 35), da größere Mikropartikel nicht mehr im erwünschten Maße über die Kleinporen der Blätter aufgenommen werden können.

Unter dem Begriff "Wasser" wie er hierin verwendet wird, ist Wasser zu verstehen, dass für die Herstellung bzw. für die Verdünnung von Düngemitteln geeignet ist. Typischerweise handelt es sich hierbei um normales Leitungswasser, dass unter den standardmäßigen Normen verwendet wird. Das für die Herstellung bzw. für die Verdünnung der erfindungsgemäßen Suspensionszubereitung verwendete Wasser kann zusätzlich noch mit ultraviolettem Licht bestrahlt werden, um den Keimgehalt (d.h. Gehalt an möglicherweise im Wasser vorkommenden Mikroorganismen) so gering wie möglich zu halten. Mit Vorteil hat das Wasser Trinkwasserqualität.

In Ländern mit hohem Lichteintrag, z.B. Ländern in Äquatornähe, kann der Partikeldurchmesser auch größer, d.h. bis zu 35 µm, gewählt werden; typischweise werden Partikelgrößen von ca. 2 - 32 µm verwendet. Aufgrund der höheren Sonneneinstrahlung kann die Photosyntheseleistung auch mit einem Calcit-Mineral mit einem größeren Partikeldurchmesser, welches günstiger in der Herstellung als ein Calcit-Mineral mit einem geringeren Partikeldurchmesser ist, erzielt werden.

Zur Verwendung als Blattdünger in gemäßigten Zonen mit geringerem Lichteintrag (z.B. Europa), in denen Landwirtschaft typischerweise wesentlich intensiver betrieben wird als in Ländern mit hoher Sonneneinstrahlung, ist es von Vorteil, wenn die Partikelgröße kleiner gewählt ist und mit Vorteil weist das mikropartikelförmige Calcit-Mineral einen Partikeldurchmesser von 5 µm oder kleiner (≤ 5µm) auf. Ein geeignetes mikropartikelförmiges Calcit-Mineral mit einem Partikeldurchmesser von ≤ 5 µm ist von der Firma Agrosolution GmbH, Österreich, unter dem Handelsnamen Agrosol erhältlich.

Vorzugsweise weisen 90% des mikropartikelförmigen Calcit-Minerals einen Partikeldurchmesser von ≤ 2 µm auf und vorzugsweise weisen 60% des mikropartikelförmigen Calcit-Minerals einen Partikeldurchmesser von ≤ 11 µm auf.

Eine weitere Verschiebung des Zeta-Potentials in den negativen Bereich nach Zugabe des Pflanzenextrakts ist ein Indiz dafür, dass noch immer eine gewisse Wechselwirkung zwischen den im Pflanzenextrakt enthaltenen wachstumsfördernden Stoffen und dem Calcit-Mineral stattfindet. Aus diesem Grunde ist es günstig, wenn das Tensid ein Tensid ist, bei dem das in den negativen Bereich verschobene Zeta-Potential des in Wasser suspendierten mikropartikelförmigen Calcit-Minerals nach Zusatz des Pflanzenextrakts nicht weiter in den negativen Bereich verschoben wird.

Die praktischen Versuche (siehe Beispiele weiter unten) haben ergeben, dass es zweckmäßig ist, wenn das in Wasser suspendierte mikropartikelförmige Calcit-Mineral bei einer Konzentration von 15 g/L Wasser ein Zeta-Potential in einem Bereich von + 10 mV bis - 10 mV aufweist, wobei das Tensid ein Tensid ist, mit dem das Zeta-Potential des in Wasser suspendierten mikropartikelförmigen Calcit-Minerals auf einen Wert von zumindest - 20 mV oder kleiner, d.h. noch weiter im negativen Bereich liegende Werte, verschiebbar ist.

Die wässrige Suspensionszubereitung wird mit Vorteil als Blattdünger verwendet. Blattdünger sind typischerweise in konzentrierter Form im Handel und werden vor der Anwendung mit Wasser auf eine gewünschte Anwendungskonzentration verdünnt.

In Bezug auf ein konzentriertes Blattdüngerprodukt liegt das Tensid vorzugsweise in einer Konzentration von 0,1% bis 5%, besonders bevorzugt in einer Konzentration von 0,25% bis 1%, in der wässrigen Suspensionszubereitung vor.

In Bezug auf ein konzentriertes Blattdüngerprodukt liegt der Gehalt des mikropartikelförmigen Calcit-Minerals in Wasser vorzugsweise in einem Bereich von ca. 100 g/L bis ca. 1000 g/L, mehr bevorzugt in einem Bereich von ca. 400 g/L bis ca. 750 g/L. Bei einem Gehalt von weniger als ca. 100g/L ist die Suspension schon stark verdünnt und weist ein entsprechend hohes Volumen auf, weshalb die Kosten für die Logistik (Transport, Lagerung etc.) sehr hoch wären. Es hat sich ferner herausgestellt, dass sich die Calcit-Partikel bei einem Gehalt von mehr als ca. 1000 g/L nicht mehr in ausreichendem Maße in Wasser suspendieren lassen.

In Bezug auf ein konzentriertes Blattdüngerprodukt weist die wässrige Suspensionszubereitung gemäß der Erfindung vorzugsweise einen Anteil von 5% bis 30% an Pflanzenextrakt, mehr bevorzugt einen Anteil von 10% bis 20% an Pflanzenextrakt, in Bezug auf das in Wasser suspendierte mikropartikelförmige Calcit-Mineral auf.

In Bezug auf ein konzentriertes Blattdüngerprodukt umfasst die wässrige Suspensionszubereitung gemäß der Erfindung daher die genannten Bestandteile vorzugsweise in den folgenden Mengen:
- 100 g/L bis 1000 g/L in Wasser suspendiertes mikropartikelförmiges Calcit-Mineral,
- 5% bis 30% Pflanzenextrakt in Bezug auf das in Wasser suspendierte mikropartikelförmige Calcit-Mineral, und
- 0,1 % bis 2% Tensid.

Noch mehr bevorzugt ist es, wenn die wässrige Suspensionszubereitung gemäß der Erfindung in Bezug auf ein konzentriertes Blattdüngerprodukt die genannten Bestandteile in den folgenden Mengen umfasst:
- 400 g/L bis 750 g/L in Wasser suspendiertes mikropartikelförmiges Calcit-Mineral,
- 10% bis 20% Pflanzenextrakt in Bezug auf das in Wasser suspendierte mikropartikelförmige Calcit-Mineral, und
- 0,25% bis 1% Tensid.

Im Zuge des Austestens verschiedener Tenside haben sich anionische Tenside als besonders vorteilhaft für die Anwendung in der vorliegenden Erfindung herausgestellt. Ohne auf eine wissenschaftliche Erklärung beschränkt zu werden, wird vermutet, dass sich der hydrophobe Teil des Tensid-Moleküls an die Oberfläche des mikropartikelförmigen Calcit-Minerals anlagert, wodurch die Partikel nach außen hin stärker negativ geladen werden. Aus diesem Grunde ist es günstig wenn das Tensid ein anionisches Tensid oder eine Mischung aus anionischen Tensiden ist. Besonders günstig ist es, wenn das anionische Tensid aus der Gruppe bestehend aus Ligninsulfonat (z.B. Ultrazine-Na der Firma Borregaard) und Na-Diisooctyl-Sulfosuccinat (z.B. Rewopol SB DO 75 der Firma Evonik) ausgewählt ist. Als besonders geeignet hat sich jedoch Ligninsulfonat, ein häufig als Netz- und Dispergiermittel eingesetztes Tensid, herausgestellt.

Darüber hinaus haben sich Saponine als vorteilhafte Tenside für die Anwendung in der vorliegenden Erfindung herausgestellt. Bei dem Saponin handelt es sich vorzugsweise um Tee-Saponin, auch als Tea Saponin bezeichnet (z.B. Tea Saponin der Firma HanghouChoisun Tea Sci-Tech Co., Ltd., China). Weitere geeignete Saponine sind z.B. Glycyrrhizin, und Quillaja-Saponin.

Mit Vorteil ist der Pflanzenextrakt ein Algenextrakt oder eine Mischung aus zwei oder mehr Algenextrakten. Bevorzugterweise ist der Algenextrakt ein Meeresalgenextrakt (z.B. Algenextrakt "Power" der Firma Dongyang Lianfeng Bio, China; Algenextrakt "Cremalga" der Firma Biolchim, Deutschland; Algenextrakte der Firma maBitec GmbH, Deutschland). Extrakte aus Algen bzw. Meeresalgen haben sich bereits in der Vergangenheit aufgrund ihrer Zusammensetzung an wachstumsfördernden Stoffen als vorteilhafte Düngemittel bzw. Blattdüngemittel erwiesen (siehe z.B. Khan et al. 2009. J Plant Growth Regul 28:386-399). Zudem sind (Meeres)algenextrakte mit einfachen Herstellungsverfahren und in großen Mengen erhältlich. Ein besonderer Vorteil von fermentierten Algenextrakten (z.B. Algenextrakt "Power" der Firma Dongyang Lianfeng Bio, China) ist es, dass durch den biologischen Aufschluss der Algen wertvolle Wuchsstoffe und andere, das Pflanzenwachstum fördernde Biomoleküle in ihrer Wirkung erhalten bleiben.

Selbst wenn Algenextrakte, insbesondere Meeresalgenextrakte, aus den oben genannten Gründen besonders bevorzugt sind, können auch andere Pflanzenextrakte in der Erfindung zum Einsatz kommen, die je nach Nährstoffbedarf der jeweiligen Pflanzenart entsprechend ausgewählt werden. Als weitere geeignete Pflanzenextrakte sind z.B. Extrakte aus Reiskleie oder Ackerschachtelhalm zu nennen.

Ein weiterer Gegenstand der Erfindung betrifft die Verwendung der erfindungsgemäßen wässrigen Suspensionszubereitung wie hierin beschrieben als Blattdünger.

Ein weiterer Gegenstand der Erfindung betrifft daher auch einen Blattdünger umfassend eine erfindungsgemäße wässrige Suspensionszubereitung wie hierin beschrieben.

Wie oben bereits erwähnt werden Blattdünger typischerweise in konzentrierter Form angeboten und vor der Anwendung mit Wasser auf eine gewünschte Anwendungskonzentration verdünnt.

Der erfindungsgemäße Blattdünger in Form eines konzentrierten Blattdüngerprodukts setzt sich vorzugsweise wie folgt zusammen:
- 100 g/L bis 1000 g/L in Wasser suspendiertes mikropartikelförmiges Calcit-Mineral,
- 5% bis 30% Pflanzenextrakt in Bezug auf das in Wasser suspendierte mikropartikelförmige Calcit-Mineral, und
- 0,1 % bis 2% Tensid.

Noch mehr bevorzugt ist es, wenn sich der Blattdünger in Form eines konzentrierten Blattdüngerprodukts wie folgt zusammensetzt:
- 400 g/L bis 750 g/L in Wasser suspendiertes mikropartikelförmiges Calcit-Mineral,
- 10% bis 20% Pflanzenextrakt in Bezug auf das in Wasser suspendierte mikropartikelförmige Calcit-Mineral, und
- 0,25% bis 1% Tensid.

Vor der Anwendung wird das konzentrierte Blattdüngerprodukt zum Erhalt eines anwendungsfertigen Blattdüngers mit Wasser nach an sich bekannter Art auf eine gewünschte Anwendungskonzentration verdünnt.

Ein anwendungsfertiger Blattdünger gemäß der Erfindung umfasst daher vorzugsweise:
- die wässrige Suspensionszubereitung mit 100 g/L bis 1000 g/L in Wasser suspendiertes mikropartikelförmiges Calcit-Mineral, 5% bis 30% Pflanzenextrakt in Bezug auf das in Wasser suspendierte mikropartikelförmige Calcit-Mineral, und 0,1% bis 2% Tensid,
- und Wasser zum Verdünnen der wässrigen Suspensionszubereitung,
wobei das Verhältnis von wässriger Suspensionszubereitung:Wasser in einem Bereich von 1:10 bis 1:1000, vorzugsweise von 1:10 bis 1:100 liegt.

Das Verdünnungsverhältnis ist dabei von der zu düngenden Pflanzenart abhängig. Es liegt im Ermessen und Können des Anwenders, z.B. des Landwirts, ein für die jeweilige Pflanzenart geeignetes Verdünnungsverhältnis zu wählen.

Die Erfindung und ihre Vorteile werden nachstehend anhand der folgenden nicht einschränkenden Beispiele näher erläutert.

### BEISPIELE

**Beispiel 1:** Einfluss verschiedener Tenside auf das Zeta-Potential einer Mischung aus einem mikropartikelförmigen Calcit-Mineral (Agrosol der Firma Agrosolution GmbH) und einem Algenextrakt in wässriger Suspension.

Dieses Beispiel zeigt, wie Tenside wie Tea Saponin, Na-Ligninsulfonat oder Rewopol das Zetapotenzial einer wässrigen Suspension aus mikropartikelförmigem Calcit-Mineral (wässrige Suspension des Calcit-Produkts Agrosol, Agrosolution GmbH, Österreich) in den negativen Bereich verschieben. Dadurch wird eine Adsorption wichtiger, im Algenextrakt vorhandener Wuchsstoffe an die Agrosolpartikel verhindert. Diese können so biologisch voll zur Wirkung kommen. Dieser Effekt wurde durch Wachstumsversuche an verschiedenen Kulturpflanzen (siehe Beispiele 2-4 weiter unten) nachgewiesen.

### Tenside:

Als Saponin wurde Tea Saponin der Fa. Hangzhou Choisun Tea Sci-tech Co., Ltd verwendet. Als Ligninsulfonat kam Ultrazine-Na der Fa. Borregaard zum Einsatz.Rewopol SB DO 75 (Na-diisooctyl-sulfosuccinat) wurde von der Fa. Evonik und AgniquePG, ein Alkylpolyglycosid, von der BASF Deutschland bezogen. Der Algenextrakt mit dem Handelsnamen "Power" stammt von der Fa. Dongyang Lianfeng Biological Technology Co.,Ltd. China.

### Zetapotenzialmessungen:

Zur Herstellung der Agrosolsuspensionen wurden jeweils 15 g Agrosol unter kräftigem Rühren in 1 Liter Trinkwasser eingetragen. Die Tenside wurden anschließend als 10 %ige Lösungen zugesetzt, gefolgt vom Algenextrakt.

Die Messungen der Zetapotenziale der Agrosolsuspensionen mit den Tensiden und dem zugesetzten Algenextrakt wurden mit einem Gerät der Fa. BTG Instruments GmbH (Mütek SZP-10) unter Verwendung eines Weißbandfilters durchgeführt. Zur Bestimmung der Leitfähigkeit, einem wichtigen Parameter bei der Messung des Zetapotenzials der wässrigen Suspensionen, wurde ein Gerät der Firma WTW, Deutschland, verwendet. Eine Beschreibung des Messverfahrens und der Durchführung einer Zetapotenzial-Messung ist im Product Sheet Mütek SZP-10 System Zeta Potential wiedergegeben.

Die Messergebnisse sind in der folgenden Tabelle 1 wiedergegeben, wobei die folgenden Abkürzungen verwendet werden:
- A: Agrosol
- P: Algenextrakt Power
- L: Ligninsulfonat
- S: Tea Saponin
- R: Rewopol
- Agn: AgniquePG

**Tabelle 1:**

| **Suspension** | **Gemessenes Zeta-Potential [mV]** |
|---|---|
| A + 0,1%Agn + 0,075% P | - 28,3 |
| A + 0,1% Agn | - 20,8 |
| A + 0,005% R + 0,075%P | -36,1 |
| A + 0,005%R | -40,3 |
| A + 0,01%L + 0,075%P | -19,5 |
| A + 0,01%L | -21,0 |
| A + 0,1%S + 0,075%P | -35,4 |
| A + 0,1%S | -37,3 |
| A + 0,075%P | -11,7 |
| A | -7,5 |

Wie die Messergebnisse deutlich zeigen, sind die Tenside Tea Saponin, Ligninsulfonat und Rewopol in der Lage das Zetapotenzial einer Agrosolsuspension in den negativen Bereich zu verschieben, wobei der in den negativen Bereich verschobene Wert durch eine nachfolgende Zugabe von Algenextrakt nicht mehr weiter in den negativen Bereich verschoben wird.

Anders verhält sich das Alkylpolyglycosid AgniquePG. Hier erfolgt nach Zugabe von Algenextrakt eine weitere Verschiebung des Zetapotenzials in den negativen Bereich was noch auf eine Interaktion der im Extrakt enthaltenen Wuchsstoffe mit den Agrosolpartikeln schließen lässt.

Im biologischen Test (Fruchtertrag bei Spitzpaprika - siehe Beispiele 2 und 3) konnte die positive Wirkung der Tenside Saponin, Ligninsulfonat und Rewopol in Kombination von Agrosol mit einem Algenextrakt eindeutig nachgewiesen werden.

**Beispiel 2:** Nachweis der positiven Wirkung von Tea Saponin (Tensid) auf die Kombination von Agrosol mit einem Algenextrakt zur Ertragssteigerung bei Spitzpaprika bei Blattdüngung.

Dieses Beispiel zeigt, dass Zusätze von Algenextrakten wie z.B. der Algenextrakt "Power" der Fa. DongyangLianfeng Biological Technology Co.,Ltd. bei Calcit-Mineral-hältigen Blattdüngern wie Agrosol nur dann voll wirksam werden, wenn eine Adsorption wichtiger, im Algenextrakt vorhandener Wuchsstoffe durch Additive, welche das Zetapotenzial der Agrosolsuspension (Agrosol der Firma Agrosolution GmbH, siehe auch Beispiel 1) stark in den negativen Bereich verschieben, verhindert wird. Zetapotenzial - Messungen haben gezeigt, dass das Tensid Tea Saponin diese Eigenschaften besitzt (siehe Beispiel 1).

### Versuchsbedingungen:

In 5 x 10 Töpfen mit 12cm Durchmesser wurden Spitzpaprika der Sorte Hunor in Pflanzerde (Terra Vita Topfsubstrat T1 Universal der Fa. Kranzinger, Österreich) bis zu einem Entwicklungsstadium entsprechend BBCH 22 im Glashaus herangezogen und anschließend jeweils 10 Töpfe 3 x in 14 tägigen Abständen mit folgenden Produkten besprüht:
- Wasser (= Kontrolle)
- Agrosol 15 g/L Wasser
- Agrosol 15 g/L Wasser + 0,1% Saponin
- Agrosol 15 g/L Wasser+ 0,1% Saponin + 0,075 % Power
- Agrosol 15 g/L Wasser + 0,075 % Power

Die Bewässerung erfolgte über den Boden der Töpfe.

Nach 24 Tagen weiterer Kultivierung - gerechnet ab der 3. Blattapplikation - wurden die Spitzpaprika pro Pflanze geerntet, gewogen und das durchschnittliche Gewicht pro Pflanze berechnet.

Wie die Darstellung der Ergebnisse gemäß Tabelle 2 zeigt, konnte eindeutig nachgewiesen werden, dass ein Zusatz von Tea Saponin die ertragssteigernde Wirkung von Power in Kombination mit Agrosol voll zur Geltung kommen lässt. In Tabelle 2 verwendete Abkürzungen:
- A: Agrosol
- P: Algenextrakt Power
- S: Tea Saponin

**Tabelle 2:**

| **Aufgesprühtes Produkt** | **Fruchtgewicht/Pflanze (g)** |
|---|---|
| Wasser | 10,0 |
| A | 12,8 |
| A + 0,075% P | 13,8 |
| A + 0,1%S + 0,075%P | 16,2 |
| A+0,1%S | 11,6 |

**Beispiel 3:** Nachweis der positiven Wirkung der Tenside Ligninsulfonat und Rewopol auf die Kombination von Agrosol mit einem Algenextrakt zur Ertragssteigerung bei Spitzpaprika bei Blattdüngung.

Dieses Beispiel zeigt, dass Zusätze von Algenextrakten wie z.B. der Algenextrakt "Power" der Fa. Dongyang Lianfeng Biological Technology Co.,Ltd. bei Calcit-Mineral-hältigen Blattdüngern wie Agrosol nur dann voll wirksam werden, wenn eine Adsorption wichtiger, im Algenextrakt vorhandener Wuchsstoffe durch Additive, welche das Zetapotenzial der Agrosolsuspension (Agrosol der Firma Agrosolution GmbH, siehe auch Beispiel 1) stark in den negativen Bereich verschieben, verhindert wird. Zeta-Potenzial - Messungen haben gezeigt, dass die Tenside Na-Ligninsulfonat und Rewopol diese Eigenschaften besitzen (siehe Beispiel 1).

### Versuchsbedingungen:

In 7 x 10 Töpfen mit 12 cm Durchmesser wurden Spitzpaprika (Capsicum annuum) der Sorte Hunor in Pflanzerde (Terra Vita Topfsubstrat T1 Universal der Fa. Kranzinger, Österreich) bis zu einem Entwicklungsstadium entsprechend BBCH 22 im Glashaus herangezogen und anschließend jeweils 10 Töpfe 3 x in 14 tägigen Abständen mit folgenden Produkten besprüht:
- Wasser (= Kontrolle)
- 15 g Agrosol /L Wasser
- 15 g Agrosol /L Wasser + 0,01% Na-Ligninsulfonat
- 15 g Agrosol /L Wasser + 0,01 % Na-Ligninsulfonat + 0,075 % Algenextrakt
- 15 g Agrosol /L Wasser + 0,075% Algenextrakt
- 15 g Agrosol /L Wasser + 0,01 % Rewopol
- 15 g Agrosol /L Wasser + 0,01 % Rewopol + 0,075 % Algenextrakt

Die Bewässerung erfolgte über den Boden der Töpfe.

Nach 30 Tagen weiterer Kultivierung - gerechnet ab der 3. Blattapplikation - wurden die Spitzpaprika pro Pflanze geerntet, gewogen und das durchschnittliche Gewicht pro Pflanze berechnet.

Wie die Darstellung der Ergebnisse gemäß Tabelle 3 zeigt, konnte eindeutig nachgewiesen werden, dass ein Zusatz von Ligninsulfonat oder Rewopol die ertragssteigernde Wirkung von Algenextrakt in Kombination mit Agrosol voll zur Geltung kommen lässt. In Tabelle 3 verwendete Abkürzungen:
- A: Agrosol
- P: Algenextrakt Power
- L: Ligninsulfonat
- R: Rewopol

**Tabelle 3:**

| **Aufgesprühtes Produkt** | **Fruchtgewicht/Pflanze (g)** |
|---|---|
| Wasser | 22,6 |
| A + 0,01%R + 0,075%P | 33,2 |
| A + 0,01% R | 25,4 |
| A + 0,075% P | 31,4 |
| A + 0,01%L + 0,075%P | 34,6 |
| A + 0,01%L | 25,0 |
| A | 25,2 |

**Beispiel 4:** Nachweis der positiven Wirkung von Tea Saponin (Tensid) auf die Kombination von Agrosol mit einem Algenextrakt zur Ertragssteigerung bei Buschbohnen bei Blattdüngung.

Dieses Beispiel zeigt, dass Zusätze von Algenextrakten wie z.B. der Algenextrakt "Power" der Fa. Dongyang Lianfeng Biological Technology Co.,Ltd. bei Calcit-Mineral-hältigen Blattdüngern wie Agrosol nur dann voll wirksam werden, wenn eine Adsorption wichtiger, im Algenextrakt vorhandener Wuchsstoffe durch Additive, welche das Zetapotenzial der Agrosolsuspension (Agrosol der Firma Agrosolution GmbH, siehe auch Beispiel 1) stark in den negativen Bereich verschieben, verhindert wird. Zetapotenzial - Messungen haben gezeigt, dass das Tensid Tea Saponin diese Eigenschaften besitzt(siehe Beispiel 1).

### Versuchsbedingungen:

In 5 x 10 Töpfen zu je 3 Pflanzen pro Topf wurden Buschbohnen (Phaseolus vulgaris var. nanus) in Pflanzerde (Terra Vita Topfsubstrat T1 Universal der Fa. Kranzinger, Österreich) bis zu einem Entwicklungsstadium entsprechend BBCH 12 im Glashaus herangezogen und anschließend jeweils 10 Töpfe 2 x in 14 tägigen Abständen mit folgenden Produkten besprüht:
- Wasser (= Kontrolle)
- 15 g Agrosol /L Wasser
- 15 g Agrosol /L Wasser + 0,1 % Tea Saponin
- 15 g Agrosol /L Wasser+ 0,1 %Tea Saponin + 0,075 % Algenextrakt
- 15 g Agrosol /L Wasser+ 0,075 % Algenextrakt

Die Bewässerung erfolgte über den Boden der Töpfe.

Nach 21 Tagen weiterer Kultivierung - gerechnet ab der 2. Blattapplikation - wurde die Biomasse pro Topf geerntet, gewogen und die durchschnittliche Biomasse pro Topf aus 10 Töpfen berechnet.

Wie die Darstellung der Ergebnisse gemäß Tabelle 4 zeigt, konnte eindeutig nachgewiesen werden, dass ein Zusatz von Tea Saponin die positive Wirkung von Power in Kombination mit Agrosol hinsichtlich erhöhter Biomasseproduktion deutlich zur Geltung kommen lässt. In Tabelle 4 verwendete Abkürzungen:
- A: Agrosol
- P: Algenextrakt Power
- S: Tea Saponin

**Tabelle 4:**

| **Aufgesprühtes Produkt** | **Biomasse/Pflanze (g)** |
|---|---|
| Wasser | 142 |
| A | 140 |
| A + 0,075% P | 142 |
| A + 0,1%S + 0,075%P | 149 |
| A+0,1%S | 142 |

## Patentansprüche

1. Wässrige Suspensionszubereitung umfassend:
ein in Wasser suspendiertes mikropartikelförmiges Calcit-Mineral mit einem Partikeldurchmesser von ≤ 35 µm,
Pflanzenextrakt, und
Tensid, mit dem das Zeta-Potential des in Wasser suspendierten mikropartikelförmigen Calcit-Minerals in den negativen Bereich verschiebbar ist.

2. Wässrige Suspensionszubereitung nach Anspruch 1, **dadurch gekennzeichnet, dass** das Tensid ein Tensid ist, bei dem das in den negativen Bereich verschobene Zeta-Potential des in Wasser suspendierten mikropartikelförmigen Calcit-Minerals nach Zusatz des Pflanzenextrakts nicht weiter in den negativen Bereich verschoben wird.

3. Wässrige Suspensionszubereitung nach Anspruch 1 oder 2, **dadurch gekennzeichnet, dass** das in Wasser suspendierte mikropartikelförmige Calcit-Mineral bei einer Konzentration von 15 g/L Wasser ein Zeta-Potential in einem Bereich von + 10 mV bis -10 mV aufweist, wobei das Tensid ein Tensid ist, mit dem das Zeta-Potential des in Wasser suspendierten mikropartikelförmigen Calcit-Minerals auf einen Wert von zumindest - 20 mV oder kleiner verschiebbar ist.

4. Wässrige Suspensionszubereitung nach einem der Ansprüche 1 bis 3, **dadurch gekennzeichnet, dass** das Tensid in einer Konzentration von 0,1% bis 5%, vorzugsweise in einer Konzentration von 0,25% bis 1%, in der wässrigen Suspensionszubereitung vorliegt.

5. Wässrige Suspensionszubereitung nach einem der Ansprüche 1 bis 3, **dadurch gekennzeichnet, dass** der Gehalt des mikropartikelförmigen Calcit-Minerals in Wasser in einem Bereich von 100 g/L bis 1000 g/L, vorzugsweise in einem Bereich von 400 g/L bis 750 g/L, liegt.

6. Wässrige Suspensionszubereitung nach einem der Ansprüche 1 bis 3, **dadurch gekennzeichnet, dass** sie einen Anteil von 5% bis 30% an Pflanzenextrakt, vorzugsweise einen Anteil von 10% bis 20% an Pflanzenextrakt, in Bezug auf das in Wasser suspendierte mikropartikelförmige Calcit-Mineral aufweist.

7. Wässrige Suspensionszubereitung nach einem der Ansprüche 1 bis 3, umfassend:
100 g/L bis 1000 g/L in Wasser suspendiertes mikropartikelförmiges Calcit-Mineral,
5% bis 30% Pflanzenextrakt in Bezug auf das in Wasser suspendierte mikropartikelförmige Calcit-Mineral, und
0,1 % bis 2% Tensid.

8. Wässrige Suspensionszubereitung nach Anspruch 7, umfassend:
400 g/L bis 750 g/L in Wasser suspendiertes mikropartikelförmiges Calcit-Mineral,
10% bis 20% Pflanzenextrakt in Bezug auf das in Wasser suspendierte mikropartikelförmige Calcit-Mineral, und
0,25% bis 1% Tensid.

9. Wässrige Suspensionszubereitung nach einem der Ansprüche 1 bis 8, **dadurch gekennzeichnet, dass** das Tensid ein anionisches Tensid oder eine Mischung aus anionischen Tensiden ist, wobei das anionische Tensid vorzugsweise aus der Gruppe bestehend aus Ligninsulfonat und Na-Diisooctyl-Sulfosuccinat ausgewählt ist.

10. Wässrige Suspensionszubereitung nach Anspruch 9, **dadurch gekennzeichnet, dass** das Tensid Ligninsulfonat ist.

11. Wässrige Suspensionszubereitung nach einem der Ansprüche 1 bis 8, **dadurch gekennzeichnet, dass** das Tensid ein Saponin, vorzugsweise Tee-Saponin (Tea Saponin), ist.

12. Wässrige Suspensionszubereitung nach einem der Ansprüche 1 bis 11, **dadurch gekennzeichnet, dass** der Pflanzenextrakt ein Algenextrakt oder eine Mischung aus zwei oder mehr Algenextrakten ist.

13. Wässrige Suspensionszubereitung nach einem der Ansprüche 1 bis 12, **dadurch gekennzeichnet, dass** das mikropartikelförmige Calcit-Mineral eine Partikelgröße von ≤ 5 µm aufweist.

14. Blattdünger umfassend eine wässrige Suspensionszubereitung nach einem der Ansprüche 1 bis 13.

15. Blattdünger nach Anspruch 14, umfassend:
- die wässrige Suspensionszubereitung mit 100 g/L bis 1000 g/L in Wasser suspendiertes mikropartikelförmiges Calcit-Mineral, 5% bis 30% Pflanzenextrakt in Bezug auf das in Wasser suspendierte mikropartikelförmige Calcit-Mineral, und 0,1% bis 2% Tensid,
- und Wasser zum Verdünnen der wässrigen Suspensionszubereitung,
wobei das Verhältnis von wässriger Suspensionszubereitung:Wasser in einem Bereich von 1:10 bis 1:1000, vorzugsweise von 1:10 bis 1:100 liegt.

16. Verwendung einer wässrigen Suspensionszubereitung nach einem der Ansprüche 1 bis 13 als Blattdünger.
